# NOUVEAU FASCICULE DE BREVET EUROPEEN

(11) **EP 3 271 637 B2**
(45) Date de publication et mention de la décision concernant l'opposition: **25.05.2022**
(45) Mention de la délivrance du brevet: 03.04.2019
(21) Numéro de dépôt: 16714978.0
(22) Date de dépôt: 24.02.2016
(51) Int. Cl.: F17C 5/00, F17C 5/06, F17C 7/00, F17C 13/02

(54) **PROCÉDÉ DE REMPLISSAGE DE RÉSERVOIRS AVEC DU GAZ SOUS PRESSION**
VERFAHREN ZUM FÜLLEN VON TANKS MIT UNTER DRUCK STEHENDEM GAS
METHOD FOR FILLING TANKS WITH PRESSURISED GAS

(30) Priorité: 17.03.2015 FR 1552189
(43) Date de publication de la demande: 24.01.2018
(73) Titulaire: L'Air Liquide Société Anonyme pour l'Etude et l'Exploitation des Procédés Georges Claude, 75007 Paris (FR)
(72) Inventeur: RAVINEL, Baptiste, 68730 Blotzheim (FR); FLYNN, Julie, 38210 Montaud (FR)
(74) Mandataire: Air Liquide
(86) Numéro de dépôt international: PCT/FR2016/050424
(87) Numéro de publication internationale: WO 2016/146912

(56) Documents cités:
- EP-A1- 2 799 757
- WO-A1-2011/049466
- WO-A2-2014/082709

## Description

La présente invention concerne un procédé de remplissage de réservoirs avec du gaz sous pression.

L'invention concerne plus particulièrement un procédé de remplissage de réservoirs avec du gaz sous pression, notamment de l'hydrogène sous pression, via une station de remplissage comprenant au moins une source de gaz sous pression et un circuit fluidique de transfert du gaz depuis la au moins une source vers les réservoirs, le circuit comprenant une première extrémité reliée à la au moins une source de gaz et une seconde extrémité munie d'une conduite de transfert destinée à être raccordée de façon amovible au réservoirs à remplir, le circuit comprenant, disposés en série entre la première extrémité et la seconde extrémité, une première vanne d'isolation, un organe de régulation de débit ou de pression, un échangeur de chaleur de refroidissement du gaz transféré vers le réservoir à remplir et une seconde vanne d'isolation, le procédé comprenant le remplissage successif d'un premier réservoir puis d'un second réservoir distinct.

L'invention s'applique avantageusement au remplissage rapide (quelques minutes) de réservoirs d'hydrogène sous pression (entre 200 et 1000 bar par exemple). L'invention s'applique notamment au remplissage de réservoirs de carburant de véhicules.

Lors du remplissage d'un réservoir d'hydrogène de gaz sous pression, la compression du gaz dans le réservoir produit un échauffement pouvant dépasser les limites d'utilisation des matériaux du réservoir. Il est ainsi généralement nécessaire de pré-refroidir le gaz avant son introduction dans le réservoir. Le document SAE J2601 précise des exemples de conditions dans lesquelles il est recommandé de remplir un réservoir. Pour cela, la station de remplissage doit pouvoir fournir du gaz refroidi à la gamme de température cible au plus vite dès que le remplissage est lancé.

Dans certaine situations, le temps de mise en route et de mise en froid des équipements de refroidissement après une certaine attente entre le remplissage de deux véhicules peut engendrer un début de remplissage avec du gaz insuffisamment froid.

Le début de la phase de remplissage d'un tel réservoir est cependant critique puisqu'il faut refroidir les lignes du circuit de remplissage et réaliser généralement un test de connexion qui est être réalisé de préférence avec un gaz froid.

Le document SAE J2601 donne par ailleurs des recommandations de remplissage plus avantageuses si les lignes sont froides au début du remplissage.

Le document WO2011/049466A1 décrit l'utilisation d'un volume de gaz disponible dans une conduite pour un remplissage.

Un but de la présente invention est de pallier tout ou partie des inconvénients de l'art antérieur relevés ci-dessus.

A cette fin, le procédé selon l'invention, par ailleurs conforme à la définition générique qu'en donne le préambule ci-dessus, est défini par la revendication 1 et notamment au moins entre les première et seconde vannes d'isolation le circuit comprend une ou des conduites comprenant une isolation thermique.

L'utilisation de la réserve de gaz comprend un transfert de gaz dans le second réservoir via notamment une ouverture de la seconde vanne.

L'invention présente propose un agencement et une utilisation des lignes du circuit de remplissage permettant d'améliorer le début du remplissage.

En effet, à l'issu d'un remplissage terminé, au lieu d'évacuer l'ensemble du gaz présent dans les lignes du circuit de remplissage en aval de l'organe de contrôle (vanne de régulation) via un rejet à l'atmosphère par exemple, l'invention conserve au moins une partie ce gaz froid et sous pression et l'utilise lors du remplissage ultérieur.

C'est-à-dire que le gaz sous pression situé à l'extrémité aval de la ligne (au niveau du flexible relié au réservoir à remplir, notamment en aval de la seconde vanne) est purgé pour permettre la déconnexion de l'extrémité aval du flexible par rapport au réservoir rempli mais le gaz situé plus en amont entre cette partie aval et l'organe de régulation (entre la seconde vanne 11 et la première vanne 7) peut être conservé et réutilisé.

Par ailleurs, des modes de réalisation de l'invention peuvent comporter l'une ou plusieurs des caractéristiques suivantes :
- la réserve de gaz est utilisée pour réaliser un test de d'étanchéité du second réservoir raccordé de façon étanche à la seconde extrémité du circuit,
- la réserve de gaz est utilisée pour réaliser un test de d'étanchéité du circuit,
- la réserve de gaz est utilisée lors d'une phase de détermination d'au moins une caractéristique physique du réservoir tel que son volume, sa température, sa pression interne, son taux de remplissage, ladite phase de détermination étant réalisée via l'injection de gaz sous pression de la réserve de gaz emprisonnée dans le circuit vers l'intérieur du second réservoir et mesure d'au moins une grandeur physique du gaz dans le réservoir à l'issue de l'injection, la grandeur physique du gaz étant choisie parmi : la température, la pression au sein du réservoir,
- le gaz emprisonné entre les deux vannes d'isolation est dans les conditions de température et de pression correspondant à la dernière phase de remplissage du premier réservoir,
- le gaz emprisonné entre les deux vannes d'isolation a une pression comprise entre 200 et 1000 bar et de préférence comprise entre 700 et 900 bar et une température comprise entre 0°C et moins 41°C et de préférence comprise entre moins 10°C et moins 30°C,
- la première vanne d'isolation est disposée dans le circuit de façon adjacente de l'échangeur de chaleur, c'est-à-dire que la première vanne d'isolation est plus proche de l'échangeur de chaleur que de la première extrémité du circuit et de préférence la première vanne d'isolation est située au niveau de l'entrée de l'échangeur,
- la seconde vanne d'isolation est disposée dans le circuit de façon adjacente à la seconde extrémité du circuit, c'est-à-dire que la seconde vanne d'isolation est plus proche de la seconde extrémité du circuit que de l'échangeur de chaleur,
- le volume du circuit situé entre les première et seconde vannes d'isolation est compris entre 0, 00005m³ et 0,01m³, ou plus, par exemple jusqu'à 0,05 m³ ou 0,1 m³ ou plus par exemple 1 m³.
- la longueur du circuit entre les première et seconde vannes d'isolation est comprise entre un mètre et cinquante mètres et de préférence comprise entre deux et trente mètres.

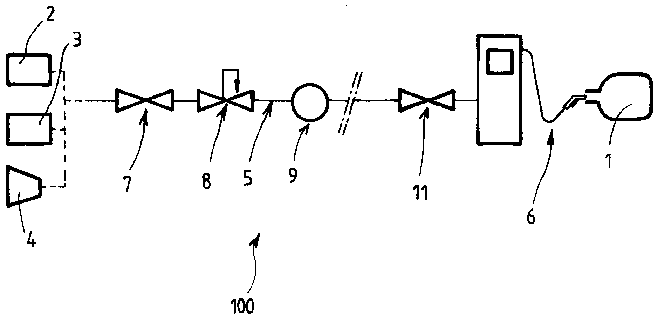

D'autres particularités et avantages apparaîtront à la lecture de la description ci-après, faite en référence à la figure unique qui représente de façon schématique et partielle, un exemple de station de remplissage de gaz pouvant mettre en oeuvre l'invention.

La station 100 de remplissage illustrée schématiquement comprend au moins une source 2, 3, 4 de gaz sous pression et un circuit 5 fluidique de transfert du gaz depuis la au moins une source vers les réservoirs 1 à remplir.

La au moins une source 2, 3, 4 peut comprendre par exemple au moins l'un parmi : un stockage de gaz sous pression ou des stockages sous pression disposés en parallèle, un ou plusieurs compresseurs...La station 100 peut notamment utiliser plusieurs réservoirs sous pression pour réaliser un remplissage par des équilibrages de pression successifs (« en cascade ») avec le réservoir à remplir (éventuellement complété ou assisté par un compresseur).

On pourra se référer par exemple aux documents FR2928716A1 et WO2015001208A2 qui décrivent plus en détail des exemples de structure et de fonctionnement de stations de remplissage.

Le circuit 5 comprenant au moins une première extrémité reliée à au moins une source 2, 3, 4 de gaz (côté amont) et une seconde extrémité (côté aval) munie d'une conduite 6 de transfert, notamment un flexible, destinée à être raccordée de façon amovible aux réservoirs 1 à remplir.

Le circuit 5 comprend, disposés en série d'amont en aval, entre la première extrémité et la seconde extrémité : une première vanne 7 d'isolation, un organe 8 de régulation de débit ou de pression (détendeur, vanne de régulation de débit, détendeur piloté, vanne de type proportionnelle ou tout autre organe approprié), un échangeur 9 de chaleur de refroidissement du gaz transféré vers le réservoir 1 à remplir et une seconde vanne 11 d'isolation.

L'échangeur 9 est un organe dans lequel le gaz est refroidi à la température cible. Bien entendu, l'agencement de plusieurs échangeurs ayant différentes structures permettant de réaliser ce refroidissement peut être envisagé.

Après l'organe 9 de refroidissement et la seconde vanne 11 d'isolement, l'extrémité aval du circuit peut comporter de façon connue des capteurs, flexibles et connectiques pour se raccorder aux réservoirs 1 des véhicules à remplir.

La représentation schématique de la figure décrit un minimum de composants. Bien entendu, le circuit 5 peut comporter classiquement d'autres équipements tels que des vannes, capteurs... intercalés ou non entre les composants illustrés à la figure. De même l'ordre des composants peut être modifié. Par exemple, la première vanne 7 d'isolement peut être située entre l'organe 8 de régulation et l'échangeur 9 voir même en aval de l'échangeur 9.

La station peut être utilisée comme suit.

Lors d'un remplissage du réservoir 1 d'un premier véhicule, dit « premier réservoir », la fin du processus de remplissage du réservoir 1 se déroule généralement aux alentours de la pression maximale de remplissage (entre 700 bar et 875 bar par exemple) avec une température de refroidissement dans les gammes recommandées (par exemple entre -17°C et -40°C). Une fois le premier réservoir 1 complètement remplit, la station 100 de remplissage peut commander la fermeture des vannes 7, 11 d'isolement de la ligne de distribution.

L'organe 9 de refroidissement est mis dans un mode prédéfini de régime d'attente du véhicule suivant. C'est-a-dire qu'un circuit de refroidissement fournissant des frigories à l'échangeur 9 est mis à l'arrêt ou maintenu ou avec un régime de refroidissement réduit par rapport à son refroidissement maximal.

De cette façon, dans la phase d'attente du véhicule suivant, l'ensemble de la ligne ou des lignes du circuit 5 située(s) entre les deux vannes 7, 11 d'isolation reste en pression et en température refroidie.

C'est-à-dire qu'une réserve de gaz sous pression et froid est emprisonnée dans le circuit 5 aux conditions des derniers instants (ou secondes) du remplissage (fin de remplissage).

Ainsi, lorsque le véhicule suivant se présente la ligne du circuit 5 est maintenue froide (à l'exception des pertes thermiques). Le remplissage du réservoir 1 de ce second véhicule (« second réservoir » 1) peut être réalisé.

Des tests préliminaires classiques (préalables au remplissage d'après la recommandation du document SAE J2601 ou conformes à toute autre logique de remplissage ou norme de remplissage propre à chaque opérateur d'une station de remplissage) peuvent être réalisés avec le gaz emprisonné. Notamment, le gaz peut être utilisé pour réaliser des tests d'étanchéité classiques en pression suffisante et également avec une température froide.

Ceci permet ainsi de démarrer le remplissage du réservoir suivant avec un gaz déjà froid et sous pression. De cette façon également, une partie non négligeable des lignes du circuit 5 est ainsi déjà pré-refroidie.

Ceci permet d'éviter ou de limiter le temps de mise en route du système de refroidissement et la phase préliminaire, où l'échange entre le gaz à refroidir et l'échangeur n'est pas encore stabilisé.

Ceci permet également de limiter les dispositifs qui permettent de préparer du gaz pré-refroidi avant le remplissage, comme par exemple le maintien du système de refroidissement à plein régime ou la présence d'une boucle de pré-refroidissement en fonctionnement permanent.

Dans le cas par exemple d'un remplissage d'un premier réservoir 1 qui se termine au bout d'une durée comprise entre 3min et 5min. A l'issue de ce remplissage, les vannes 7, 11 d'isolation sont fermées.

L'extrémité aval de ligne de distribution (flexible notamment) connectée au véhicule peut être vidée de son gaz (en aval de la seconde vanne 11 d'isolement).

En revanche, entre les deux vannes 7, 11 d'isolement la longueur du circuit peut être comprise typiquement entre deux mètres et trente mètres. Cette portion est ainsi remplie d'hydrogène par exemple à une pression comprise entre 700 bar et 875 bar et un une température pouvant typiquement être entre -40°C et -17°C. Cette ligne est de préférence calorifugée. Cette isolation thermique est adaptée pour limiter au maximum les déperditions thermiques peut permettre de maximiser et de prolonger les effets de l'invention.

Après un temps d'attente typiquement d'ordre de une à vingt minutes, le gaz peut s'être légèrement réchauffé, mais reste dans une gamme de température froide (-40°C à -17°C par exemple).

Un second véhicule peut se présenter à la station 100. L'utilisateur peut réaliser les opérations de connexion et d'authentification de son véhicule. Le remplissage est ensuite lancé par exemple via l'appui sur un bouton ou un indicateur de début.

La première étape de remplissage comprenant par exemple un test de fuite, et/ou une détermination des caractéristiques du réservoir et des conditions de la ligne de remplissage peut être réalisé avec le gaz contenu entre les vannes 7, 11 d'isolement (notamment via l'ouverture de la seconde vanne 11).

Après ou pendant l'utilisation du gaz emprisonné, le processus de remplissage du second réservoir 11 peut se poursuivre avec le gaz sous pression provenant de la ou des sources 2, 3, 4.

## Revendications

1. Procédé de remplissage de réservoirs (1) avec du gaz sous pression, notamment de l'hydrogène sous pression, via une station (100) de remplissage comprenant au moins une source (2, 3, 4) de gaz sous pression et un circuit (5) fluidique de transfert du gaz depuis la au moins une source vers les réservoirs (1), le circuit (5) comprenant une première extrémité reliée à la au moins une source (2, 3, 4) de gaz et une seconde extrémité munie d'une conduite (6) de transfert destinée à être raccordée de façon amovible au réservoirs (1) à remplir, le circuit (5) comprenant, disposés en série entre la première extrémité et la seconde extrémité, une première vanne (7) d'isolation, un organe (8) de régulation de débit ou de pression, un échangeur (9) de chaleur de refroidissement du gaz transféré vers le réservoir (1) à remplir et une seconde vanne (11) d'isolation, la station comprenant un circuit de refroidissement fournissant des frigories à l'échangeur (9) de chaleur de refroidissement, le procédé comprenant le remplissage successif d'un premier réservoir (1) puis d'un second réservoir (1) distinct, à la fin du remplissage du premier réservoir (1) les première (7) et seconde (11) vannes d'isolation étant fermées pour emprisonner une réserve de gaz sous pression dans le circuit (5) entre ces deux vannes (7, 11), la réserve de gaz étant utilisée pour le remplissage du second réservoir (1) via l'ouverture de la seconde vanne (11), **caractérisé en ce qu'**au moins entre les première (7) et seconde (11) vannes d'isolation le circuit comprend une ou des conduites comprenant une isolation thermique et **en ce que**, à la fin du remplissage du premier réservoir (1), l'échangeur (9) de refroidissement est mis un mode prédéfini de régime d'attente du second réservoir suivant durant lequel le circuit de refroidissement fournissant des frigories à l'échangeur (9) de chaleur de refroidissement est mis à l'arrêt ou maintenu avec un régime de refroidissement réduit par rapport à son refroidissement maximal,

2. Procédé selon la revendication 1, **caractérisé en ce que** la réserve de gaz est utilisée pour réaliser un test d'étanchéité du second réservoir (1) raccordé de façon étanche à la seconde extrémité du circuit.

3. Procédé selon la revendication 1 ou 2, **caractérisé en ce que** la réserve de gaz est utilisée pour réaliser un test de d'étanchéité du circuit (5).

4. Procédé selon l'une quelconque des revendications 1 à 3, **caractérisé en ce que** la réserve de gaz est utilisée lors d'une phase de détermination d'au moins une caractéristique physique du réservoir (1) tel que son volume, sa température, sa pression interne, son taux de remplissage, ladite phase de détermination étant réalisée via l'injection de gaz sous pression de la réserve de gaz emprisonnée dans le circuit (5) vers l'intérieur du second réservoir (2) et mesure d'au moins une grandeur physique du gaz dans le réservoir (1) à l'issue de l'injection, la grandeur physique du gaz étant choisie parmi : la température, la pression au sein du réservoir.

5. Procédé selon l'une quelconque des revendications 1 à 4, **caractérisé en ce que** le gaz emprisonné entre les deux vannes (7, 11) d'isolation est dans les conditions de température et de pression correspondant à la dernière phase de remplissage du premier réservoir (1).

6. Procédé selon l'une quelconque des revendications 1 à 5, **caractérisé en ce que** le gaz emprisonné entre les deux vannes (7, 11) d'isolation a une pression comprise entre 200 et 1000 bar et notamment entre 700 et 900 bar et une température comprise entre 0°C et moins 41 °C et notamment comprise entre moins 10°C et moins 30°C.

7. Procédé selon l'une quelconque des revendications 1 à 6, **caractérisé en ce que** la première vanne (7) d'isolation est disposée dans le circuit de façon adjacente de l'échangeur (9) de chaleur, c'est-à-dire que la première vanne (7) d'isolation est plus proche de l'échangeur (9) de chaleur que de la première extrémité du circuit (5) et de préférence la première vanne (7) d'isolation est située au niveau de l'entrée de l'échangeur (9).

8. Procédé selon l'une quelconque des revendications 1 à 7, **caractérisé en ce que** la seconde vanne (11) d'isolation est disposée dans le circuit (5) de façon adjacente à la seconde extrémité du circuit (5), c'est-à-dire que la seconde vanne (11) d'isolation est plus proche de la seconde extrémité du circuit (5) que de l'échangeur (9) de chaleur.

9. Procédé selon l'une quelconque des revendications 1 à 8, **caractérisé en ce que** le volume du circuit situé entre les premières (7) et seconde (11) vannes d'isolation est compris entre 0, 00005m³ et 0,01m³.

10. Procédé selon l'une quelconque des revendications 1 à 9, **caractérisé en ce que** la longueur du circuit (5) entre les première (7) et seconde (11) vannes d'isolation est comprise entre un mètre et cinquante mètres et de préférence comprise entre deux et trente mètres.

11. Procédé selon l'une quelconque des revendications 1 à 10, **caractérisé en ce que** le gaz emprisonné entre les deux vannes (7,11) d'isolation à une pression entre 700 et 900 bar et une température comprise entre moins 10°C et moins 30°C.

## Patentansprüche

1. Verfahren zum Füllen von Behältern (1) mit unter Druck stehendem Gas, insbesondere unter Druck stehendem Wasserstoff, über eine Füllstation (100), die mindestens eine Quelle (2, 3, 4) für unter Druck stehendes Gas und einen Fluidkreislauf (5) für den Transfer des Gases von der mindestens einen Quelle zu den Behältern (1) umfasst, wobei der Kreislauf (5) ein erstes Ende umfasst, das mit der mindestens einen Gasquelle (2, 3, 4) verbunden ist, und ein zweites Ende, das mit einer Transferleitung (6) versehen ist, die dazu bestimmt ist, lösbar mit den zu füllenden Behältern (1) verbunden zu werden, wobei der Kreislauf (5), in Reihe zwischen dem ersten Ende und dem zweiten Ende angeordnet, ein erstes Absperrventil (7), ein Durchsatz- oder Druckregulierorgan (8), einen Wärmeaustauscher (9) zum Kühlen des in den zu füllenden Behälter (1) transferierten Gases und ein zweites Absperrventil (11) umfasst, wobei die Station einen Kühlkreislauf umfasst, der dem kühlenden Wärmeaustauscher (9) Frigorien bereitstellt, wobei das Verfahren das aufeinanderfolgende Füllen eines ersten Behälters (1), dann eines zweiten separaten Behälters (1) umfasst, wobei am Ende des Füllens des ersten Behälters (1) das erste (7) und zweite (11) Absperrventil geschlossen werden, um eine Reserve von unter Druck stehendem Gas im Kreislauf (5) zwischen diesen beiden Ventilen (7, 11) einzuschließen, wobei die Gasreserve verwendet wird, um den zweiten Behälter (1) über die Öffnung des zweiten Ventils (11) zu füllen, **dadurch gekennzeichnet, dass** der Kreislauf zumindest zwischen dem ersten (7) und zweiten (11) Absperrventil eine oder mehrere Leitungen umfasst, die eine Wärmedämmung umfassen, und dadurch, dass der kühlende Austauscher (9) am Ende des Füllens des ersten Behälters (1) in einen vorbestimmten Betriebsmodus zum Warten auf den folgenden zweiten Behälter versetzt wird, während dem der Kühlkreislauf, der dem kühlenden Wärmeaustauscher (9) Frigorien bereitgestellt hat, gestoppt wird oder in Bezug auf seine maximale Kühlung in einem reduzierten Kühlbetrieb gehalten wird.

2. Verfahren nach Anspruch 1, **dadurch gekennzeichnet, dass** die Gasreserve verwendet wird, um eine Dichtheitsprüfung des zweiten Behälters (1) durchzuführen, der dicht mit dem zweiten Ende des Kreislaufs verbunden ist.

3. Verfahren nach Anspruch 1 oder 2, **dadurch gekennzeichnet, dass** die Gasreserve zum Durchführen einer Dichtheitsprüfung des Kreislaufs (5) verwendet wird.

4. Verfahren nach einem der Ansprüche 1 bis 3, **dadurch gekennzeichnet, dass** die Gasreserve während einer Phase zur Bestimmung mindestens einer physikalischen Eigenschaft des Behälters (1) wie dessen Volumen, dessen Temperatur, dessen Innendruck, dessen Füllungsgrad verwendet wird, wobei die Bestimmungsphase durch das Einspritzen von unter Druck stehendem Gas aus der im Kreislauf (5) eingeschlossenen Gasreserve in das Innere des zweiten Behälters (2) und Messen mindestens einer physikalischen Größe des Gases im Behälter (1) nach dem Einspritzen durchgeführt wird, wobei die physikalische Größe des Gases ausgewählt wird aus: der Temperatur, dem Druck innerhalb des Behälters.

5. Verfahren nach einem der Ansprüche 1 bis 4, **dadurch gekennzeichnet, dass** das zwischen den beiden Absperrventilen (7, 11) eingeschlossene Gas unter den Temperatur- und Druckbedingungen steht, die der letzten Füllphase des ersten Behälters (1) entsprechen.

6. Verfahren nach einem der Ansprüche 1 bis 5, **dadurch gekennzeichnet, dass** das zwischen den beiden Absperrventilen (7, 11) eingeschlossene Gas einen Druck zwischen 200 und 1000 bar und insbesondere zwischen 700 und 900 bar und eine Temperatur zwischen 0 °C und minus 41 °C und insbesondere zwischen minus 10 °C und minus 30 °C aufweist.

7. Verfahren nach einem der Ansprüche 1 bis 6, **dadurch gekennzeichnet, dass** das erste Absperrventil (7) im Kreislauf angrenzend an den Wärmeaustauscher (9) angeordnet ist, das heißt, dass das erste Absperrventil (7) näher am Wärmeaustauscher (9) als am ersten Ende des Kreislaufs (5) ist und sich das erste Absperrventil (7) vorzugsweise am Eingang des Austauschers (9) befindet.

8. Verfahren nach einem der Ansprüche 1 bis 7, **dadurch gekennzeichnet, dass** das zweite Absperrventil (11) im Kreislauf (5) angrenzend an das zweite Ende des Kreislaufs (5) angeordnet ist, das heißt, dass das zweite Absperrventil (11) näher am zweiten Ende des Kreislaufs (5) als am Wärmeaustauscher (9) ist.

9. Verfahren nach einem der Ansprüche 1 bis 8, **dadurch gekennzeichnet, dass** das Volumen des Kreislaufs zwischen dem ersten (7) und zweiten (11) Absperrventil zwischen 0,00005 m³ und 0,01 m³ beträgt.

10. Verfahren nach einem der Ansprüche 1 bis 9, **dadurch gekennzeichnet, dass** die Länge des Kreislaufs (5) zwischen dem ersten (7) und zweiten (11) Absperrventil zwischen einem Meter und fünfzig Metern und vorzugsweise zwischen zwei und dreißig Metern beträgt.

11. Verfahren nach einem der Ansprüche 1 bis 10, **dadurch gekennzeichnet, dass** das zwischen den beiden Absperrventilen (7, 11) eingeschlossene Gas einen Druck zwischen 700 und 900 bar und eine Temperatur zwischen minus 10 °C und minus 30 °C aufweist.

## Claims

1. Method for filling tanks (1) with pressurised gas, in particular pressurised hydrogen, via a filling station (100) comprising at least one pressurised-gas source (2, 3, 4) and a fluid circuit (5) for transferring gas from the at least one source to the tanks (1), the circuit (5) comprising a first end connected to the at least one source (2, 3, 4) of gas and a second end provided with a transfer conduit (6) intended to be connected removably to the tanks (1) to be filled, the circuit (5) comprising, disposed in series between the first end and the second end, a first isolation valve (7), a flow-rate or pressure regulation member (8), a heat exchanger (9) for cooling gas transferred to the tank (1) to be filled, and a second isolation valve (11), the method comprising the successive filling of a first tank (1) and then a separate second tank (1), at the end of the filling of the first tank (1) the first (7) and second (11) isolation valves being closed in order to trap a reserve of pressurised gas in the circuit (5) between these two valves (7, 11), the reserve of gas being used for filling the second tank (1) via the opening of the second valve (11), **characterised in that** at least between the first (7) and second (11) isolation valves the circuit comprises one or more conduits comprising thermal insulation and **in that**, at the end of filling the first tank (1), the cooling exchanger (9) is put into a predefined mode for providing a delay of the following second tank during which the cooling circuit providing frigories to the heat exchanger (9) for cooling is stopped or maintained with a reduced cooling provision with respect to its maximum cooling.

2. Method according to claim 1, **characterised in that** the reserve of gas is used to carry out a sealing test on the second tank (1) connected sealingly to the second end of the circuit.

3. Method according to claim 1 or 2, **characterised in that** the reserve of gas is used to carry out a sealing test on the circuit (5).

4. Method according to any one of claims 1 to 3, **characterised in that** the reserve of gas is used during a phase of determining at least one physical characteristic of the tank (1) such as its volume, its temperature, its internal pressure or its filling ratio, said determination phase being implemented via the injection of pressurised gas from the reserve of gas trapped in the circuit (5) to the inside of the second tank (2) and measurement of at least physical quantity of the gas in the tank (1) at the end of the injection, the physical quantity of the gas being chosen from: the temperature or the pressure in the tank.

5. Method according to any of claims 1 to 4, **characterised in that** the gas trapped between the two isolation valves (7, 11) is under the temperature and pressure conditions corresponding to the last filling phase of the first tank (1).

6. Method according to any of claims 1 to 5, **characterised in that** the gas trapped between the two isolation valves (7, 11) has a pressure of between 200 and 1000 bar and in particular between 700 and 900 bar and a temperature of between 0°C and minus 41°C and in particular between minus 10°C and minus 30°C.

7. Method according to any of claims 1 to 6, **characterised in that** first isolation valve (7) is disposed in the circuit adjacent to the heat exchanger (9), that is to say the first isolation valve (7) is closer to the heat exchanger (9) than the first end of the circuit (5), and preferably the first isolation valve (7) is situated at the inlet of the exchanger (9).

8. Method according to any of claims 1 to 7, **characterised in that** the second isolation valve (11) is disposed in the circuit (5) adjacent to the second end of the circuit (5), that is to say the second isolation valve (11) is closer to the second end of the circuit (5) than to the heat exchanger (9).

9. Method according to any of claims 1 to 8, **characterised in that** the volume of the circuit situated between the first (7) and second (11) isolation valve is between 0.00005 m³ and 0.01 m³.

10. Method according to any of claims 1 to 9, **characterised in that** the length of the circuit (5) between the first (7) and second (11) isolation valves is between one metre and fifteen metres and preferably between two and thirty metres.

11. Method according to any of claims 1 to 10, **characterised in that** the gas trapped between the two isolation valves (7, 11) at a pressure of between 700 and 900 bar and a temperature of between minus 10°C and minus 30°C.
